# EUROPEAN PATENT APPLICATION

(11) **EP 3 211 864 A1**
(43) Date of publication of application: **30.08.2017**
(21) Application number: 16156980.1
(22) Date of filing: 23.02.2016
(51) Int. Cl.: H04L 29/12, H04L 12/24, H04L 29/08

(54) **FIELD COMMUNICATION INTERFACE WITH IMPROVED AUTOCONFIGURATION**

(71) Applicant: ABB Schweiz AG, 5400 Baden (CH)
(72) Inventor: Schubert, Jörg, 31275 Lehrte (DE); Norberg, Robert, 63223 Eskilstuna (SE)
(74) Representative: Marks, Frank

(57) **Abstract**

A field communication interface (1), FCI, for interfacing field equipment (2) with a network (120) of an industrial control system (100), comprising a network interface (3) that is configurable to participate in the network (120) using a network address (3a), wherein the FCI (1) further comprises:
a location determining unit (4) configured to determine a location identifier (1a) that uniquely identifies the physical location of the FCI (1) within the industrial control system (100) and/or within the network (120); and
an address determining unit (5) configured to determine a network address (3a) that is valid in the network (120) from the location identifier (1a).

A FCI management unit (110) for an industrial control system (100) where field equipment (2) is installable in a plurality of discrete locations (101a-101d), wherein at least one field equipment (2) is interfaced with the network (120) of the industrial control system (100) by means of a FCI (1), wherein the FCI management unit (110) comprises a database (130) that is configured to hold a set of configuration parameters (8) for every location (101a-101d), wherein the database (130) is searchable (135) by the location identifier (1a).

## Description

The invention relates to a field communication interface for an industrial control system with improved network autoconfiguration and to a corresponding management unit for such interfaces.

### Background of the invention

In an industrial control system, field equipment is configured and controlled remotely through the network of the control system. The field equipment has only few, if any, manual controls (e.g. push buttons). A field communication interface, FCI, enables the field equipment to participate in the network, so that the field equipment can perform its job under the control of the control system.

In order to participate in the network, the FCI needs a valid network address. When a new FCI is installed, it has no way of knowing its initial network address.

Previously, DIP or rotary switches installed locally on the FCI were commonly used to configure the initial network address. As a more comfortable alternative, the FCI could provide a web-based configuration interface that could be accessed by connecting a service computer locally to the FCI via a wired or wireless service tool connection.

These modes of manually configuring an initial network address have several drawbacks. The manual configuration is time-consuming and prone to errors, and it has to be redone whenever a defective FCI is replaced with a new one. In addition, the cost for additional DIP or rotary switches, or for a separate service tool connection, is mostly wasted because the manual configuration will typically be performed only once during the life of the FCI. All subsequent changes to the network configuration will be effected through the industrial control system.

An initial network address can also be automatically assigned by a centralized network unit using well-known network services such as DHCP. The FCI is then identified by the unique MAC address of its network interface. However, the control system then has no way of knowing which piece of field equipment is served by the FCI, so a fair amount of the configuration of the new FCI will still have to be done manually. Since MAC addresses are globally unique, when a defective FCI is replaced, the new FCI will have a different MAC address, and the manual configuration work will have to be redone.

### Object of the invention

It is therefore the object of the present invention to improve the automatic configuration of the initial network address for FCI, particularly in situations where a defective FCI is replaced with a new one.

To this end, an improved FCI, and a corresponding FCI management unit, are provided.

### Disclosure of the invention

The present invention provides a field communication interface, FCI, for interfacing field equipment with a network of an industrial control system. The field equipment may be any type of equipment that is used to interact with, or to monitor, the industrial process. It may, for example, be any suitable type of sensor that measures some physical quantity, such as a voltage, a current, a temperature, a force or a pressure. It may, for example, also be any suitable type of actor, such as a valve, a relay, a switch or a motor.

The FCI comprises a network interface, which may be a wired or wireless interface. The network may be of any suitable type. Preferably, the network is an Ethernet network, and most preferably, it is an industrial Ethernet network according to a Profinet standard. The network may employ any suitable protocol for communication between the entities of the industrial control system. Most preferably, the network employs the IP protocol, so that communication can be effected, for example, by means of TCP connections and UDP datagrams. An IP network may use IPv4 and/or IPv6 addresses, and these addresses may, for example, be private addresses valid only within the network of the industrial control system, addresses valid in a virtual private network that interconnects multiple sites, or globally routable addresses that are reachable from the Internet.

According to the invention, the FCI further comprises a location determining unit. This location determining unit is configured to determine a location identifier that uniquely identifies the physical location of the FCI within the industrial control system and/or within the network. The FCI further comprises an address determining unit that is configured to determine a network address that is valid in the network of the industrial control system from the location identifier.

The inventors have found that for reasons of physics, FCIs are consumables that will have to be replaced multiple times during the life of the industrial plant. The network interface of the FCI contains a transceiver which has to provide a certain transmit power for transmission on a wired or wireless link. Where there is a high power, there is heat, and heat will inevitably cause a degradation of semiconductor components over time. Therefore, FCIs have a limited service life. The service life of the actual field equipment may be a lot longer: For example, power dissipation, and thus heat production, in a sensor may be a lot lower than in the transceiver of the FCI. Actors in the field equipment may use considerably higher power than the transceiver of the FCI, but those actors are usually powered with a far lesser duty cycle than the transceiver of the FCI. For example, a valve actor may be active only a few times a day for a few seconds each. In addition, the components in actors may be less prone to progressive degradation by heat than the transceiver of the FCI.

On the other hand, the FCIs will typically only be installed in a number of discrete places that are fixed during the design of the plant and will not change. Thus, there is mostly a one-to-one correlation between the physical location of the FCI and the field equipment that this FCI shall serve, and thus also a one-to-one correlation between the physical location of the FCI and the functions that this FCI is to perform in the industrial control system.

According to the invention, when a defective FCI is replaced with a new one in the same physical location, the location determining unit of the new FCI will determine the same location identifier that the location determining unit of the old FCI had previously determined. Therefore, the address determining unit of the new FCI will assign the same network address to the new FCI that the address determining unit of the old FCI had assigned to the old FCI. Thus, the new FCI will automatically report to the network with the same initial network address as the old FCI had done. The replacement of the FCI does not entail a manual configuration of the initial network address anymore.

The physical location of the FCI can be determined by any suitable means. The determination needs to be only exact enough so that all places in the industrial control system that are configured to receive a FCI can be distinguished from one another. Apart from that, the determination needs to be only reproducible enough so that when an old FCI is replaced with a new FCI, the new FCI will reliably be recognized to be in the same physical location.

For example, the location determining unit may comprise a geolocating unit that is configured to evaluate the physical location of the FCI from radio signals emitted by a plurality of terrestrial and/or orbiting transmitters. For example, the radio signals of GPS, Galileo, Glonass or some other satellite based geolocation system may be evaluated. To locate FCIs in places where there is no satellite reception, terrestrial transmitters may be used. For example, such transmitters may be installed indoors in a factory building to provide a short-range geolocation of FCIs within this building.

To ensure reproducibility, a suitable discretization of the location coordinates determined by means of the geolocation may be employed. For example, if no two locations in the plant that may receive a FCI are closer than 3 meters together, and the location coordinates are discretized to an accuracy of 1 meter by 1 meter, the locations can still be unambiguously distinguished from one another, but small measurement inaccuracies in the coordinates will not result in a different location identifier being determined. Therefore, advantageously, the location determining unit is additionally configured to discretize the physical location obtained from the evaluation to an accuracy finer than half of the shortest distance between any two locations in the industrial control system that are adapted to receive a FCI.

As an alternative or in combination, the location determining unit may comprise a mapping unit that maps a physical location to a location identifier based on whether the physical location is within a specific area assigned to the location identifier. Areas assigned to different location identifiers should then not overlap. For example, if there are several locations in the plant that may receive a FCI and no two of these locations are closer than 3 meters together, all physical locations within a circle with a diameter of 2.5 meters around a location that may receive a FCI may be assigned to the location identifier that corresponds to this one location.

In a further advantageous embodiment of the invention, the location determining unit comprises an interrogating unit configured to interrogate a unique feature of the field equipment and/or a permanently installed mounting and termination unit, MTU, that receives and/or houses the field equipment.

As detailed before, a plant typically comprises a plurality of discrete locations that may receive field equipment, and these locations are typically determined when the plant is designed and built. Even if the actual field equipment may need to be upgraded or replaced, once the MTU that receives and/or houses the field equipment is installed in one of the discrete locations, this may stay there permanently. Thus, the term "permanently installed" does not imply that the MTU is mounted in its place in a manner that cannot be released non-destructively. Rather, this term is to be construed to mean that it is unlikely that there will be a need to remove the MTU again during the life of the plant.

If the MTU is installed permanently, and it has some unique feature that can be interrogated by the interrogating unit, then there will be a one-to-one correlation between this feature and the physical location of the MTU. Therefore, the location determining unit is able to derive the desired location identifier from the unique feature. Specifically, the unique feature may be used as the location identifier.

In the same way, a unique feature of the field equipment may be interrogated by the interrogating unit. For example, there may be a field equipment that has no MTU. The unique feature may be exploited in an analogous way. The only relevant difference between a unique feature of the MTU and a unique feature of the field equipment is that during the life of the plant, the field equipment is more likely to be replaced by a new one because it may comprise moving parts and other components that have a limited service life. However, as detailed before, the field equipment will have to be replaced far less often than the FCI.

The unique feature may be a feature that has been applied to the MTU or to the field equipment on purpose. Such a feature may, for example, be a unique serial number or other code. However, the unique feature may also, for example, be a randomly varying feature that is created during manufacture of the MTU or of the field equipment. For example, there may be a random corrugation that creates a unique speckle pattern when irradiated with a laser beam from the interrogating unit.

In a specially advantageous embodiment of the invention, the interrogating unit comprises means to read the unique feature, and/or the location identifier, from a machine-readable data carrier affixed to the MTU and/or to the field equipment. The data carrier may take any suitable form. The unique feature, and/or the location identifier, may, for example, be stored in a memory, such as a ROM or PROM, that can be read out using a wired connection. It may also, for example, be stored in a transponder that can be interrogated by means of radio waves, such as a RFID or NFC transponder. An optically readable representation of the unique feature and/or of the location identifier may also be used as a machine-readable data carrier.

Preferably, the FCI is further configured to receive configuration parameters for the FCI, and/or for the field equipment, from the industrial control system. Since there is a one-to-one correlation between the exact location of the FCI and the exact purpose that the FCI and the corresponding field equipment shall serve, there is also a one-to-one correlation between said exact location and the configuration parameters that the FCI, and/or the field equipment, need in order to start normal operations. Since the configuration parameters are set via the industrial control system, rather than by directly punching them into a keypad on the equipment itself, the configuration parameters that a FCI had are stored not only in the FCI itself, but also somewhere else in the industrial control system. Therefore, these parameters will still be available if the FCI is dead. If the dead FCI is replaced by a new one, the industrial control system may recognize that this FCI takes the place of the dead one and supply it with the correct configuration parameters. In this manner, when a FCI needs to be replaced, no local user interaction with the new FCI is required at all besides the physical replacement of the dead FCI.

This automatic configuration may, for example, be implemented by means of an embodiment of the invention where the FCI further comprises a nonvolatile memory for storing the location identifier. The FCI is configured to, upon power-up of the FCI, compare the location identifier obtained by the location determining unit with the location identifier stored in the nonvolatile memory. What happens then is dependent on the outcome of this comparison.

If the nonvolatile memory contains no location identifier, this means that the FCI is a new FCI. The location identifier obtained by the location determining unit is then stored in the nonvolatile memory. Since the FCI is new and has not been previously configured, it is in need of a configuration.

If the location identifier obtained by the location determining unit differs from the location identifier stored in the nonvolatile memory, this means that the FCI had been previously used and configured in a different location. Since a different configuration will be required at the new location of this FCI, the old configuration is no longer usable. The FCI stores the newly obtained location identifier in the nonvolatile memory and disregards its previous configuration. It is in need for a new configuration.

Either way, the FCI subsequently retrieves configuration parameters from the industrial control system. Except when a location is equipped with a FCI for the very first time, the FCI will take the place of a previous one, so a set of configuration parameters that correspond to the location of the FCI will be available in the system. Optionally, additional checks may be implemented to verify that the configuration parameters are compatible with and sufficient for the new FCI. For example, an upgraded version of the FCI may have additional functionality that needs configuring, so a previous set of configuration parameters that is silent about this new functionality may not suffice for the new FCI to start normal operations. Therefore, when linking up with the network, the FCI may transmit additional information that allows to identify the FCI, such as device type, version information, or vendor.

If the retrieval of the configuration information is not successful, the FCI shall wait to be configured before starting normal operations. To effect such configuration, a communication or application engineer may enter the required information into the industrial control system, which will forward it to the FCI via the network. The FCI is reachable in the network under its network address that has been autoconfigured on the basis of its physical location.

If the comparison returns a match between the location identifier stored in the nonvolatile memory and the location identifier obtained by the location determining unit, then it is confirmed that the FCI is installed in the proper location and its present configuration is appropriate for this location. The FCI then starts normal operations. In this manner, an FCI will automatically resume normal operations after it has been power-cycled while remaining installed in the same place.

When linking up with the network, an FCI that is in need for configuration may transmit its location identifier to an entity in the industrial control system that manages the configurations of FCIs and/or of field equipment. This is the most suitable key to look up whether a set of configuration parameters is available for a specific location. Preferably, the address determining unit is additionally configured to biuniquely map the location identifier onto a network address. This means that a specific location identifier will result in one and only one network address being assigned, and that, in reverse, the location identifier will be uniquely derivable from the network address by other entities on the network. In this manner, there is no need to separately communicate the location identifier.

Such a biunique mapping may, for example, be effected by appending the location identifier to an address prefix that is specific for the network, thereby forming a complete network address that is valid in the network. For example, if the network uses global IPv6 addresses, the company where the industrial control system is installed will at least have been assigned a /64 network, where the first 64 of the 128 bits that make up an IPv6 address identify the company network. The company may sub-divide this address space further into subnetworks. For example, the next 16 bits of the IPv6 address may identify one of 65.536 possible subnetworks within the company. One of these subnetworks may be the network of the industrial control system. In all IPv6 addresses of this /80 subnetwork, the first 80 (64+16) bits are fixed because they identify this subnetwork. The remaining 48 bits can be filled with the location identifier, which allows for more than 1014 possible locations.

The configuration of the FCI may include its final network address and other final communication relations according to the protocol used and the application needed in the industrial control system. However, the network address autoconfigured by the FCI may also be used as a permanent network address, depending on the layout of the network.

To verify that the FCI is installed in the correct place, the FCI may be made to communicate its location identifier by sending an "identification" command from the industrial control system, or issuing such a command directly on the FCI, for example, by means of a push button.

The invention also provides a FCI management unit for an industrial control system where field equipment is installable in a plurality of discrete locations. At least one field equipment is interfaced with the network of the industrial control system by means of a FCI according to the invention.

According to the invention, the FCI management unit comprises a database that is configured to hold a set of configuration parameters for every one of the discrete locations. This database is searchable by the location identifier that the location determining unit in the FCI is configured to determine.

Previously, configuration information in a central management system was usually tied to a unique hardware address of equipment, such as the MAC address of an Ethernet network interface. Since the network interface, of all things, is the component that will have to be replaced fairly often during the life of the plant, the organization of configuration information by hardware address resulted in a lot of redundant manual configuration work having to be redone. The new organization by location identifier therefore greatly facilitates the replacement an FCI by a new one.

The database may additionally hold any other suitable information. For example, it may store an indication whether the FCI management unit has already been contacted by a FCI at each location. For example, if the FCI management unit encounters a location identifier for the first time, it may determine that the FCI at the corresponding location is in need for configuration, and propagate the FCI into a device life list for further engineering work. Once the FCI has been properly engineered and configured, the information associated with the location in the database may be enriched with additional information, such as a tag name or label that describes the FCI.

Thus, the invention provides at least the following business benefits:
- Faster commissioning of multiple pieces of field equipment without the need to enter configuration details locally that are necessary to communicate with the industrial control system;
- Less error prone process to establish initial communication contact between the industrial control system and pieces of field requipment;
- No limitations with regard to the number of "new" pieces of field equipment that can be connected to the industrial control system without proper initial network configuration;
- No need for user accessible address switches on the FCI.

In the following, the invention is explained and illustrated using Figures without any intention to limit the scope of the invention.

### Description of the Figures

- Figure 1:: Embodiment of the industrial control system 100 with central FCI management unit 110.
- Figure 2:: Embodiment of a FCI 1 at location 100a.

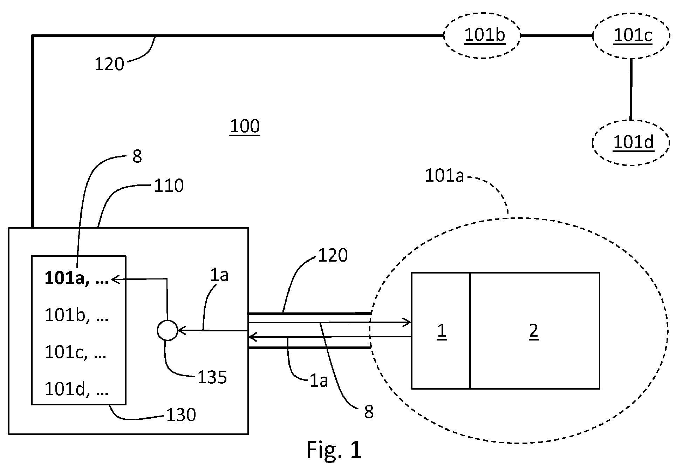

Figure 1 shows an embodiment of the industrial control system 100. The system 100 comprises four discrete locations 101a-101d in which field equipment 2 is installable. The locations 101a-101d are all connected to the central FCI management unit 110 via a network 120.

In the location **100a,** a field equipment **2** is installed and interfaced to the network **120** via its FCI **1**. The FCI **1** reports its location identifier 1a to the FCI management unit **110** via the network **120.** The FCI management unit **110** comprises a database **130.** For each location **101a-101d,** the database **130** holds a set of configuration parameters **8.** The database is searchable **135** by means of the location identifier **1 a.** Thus, when the FCI management unit **110** receives the location identifier **1a** from the FCI **1**, it can respond with the correct configuration parameters **8.** This enables the FCI **1**, and subsequently the attached field equipment **2,** to start normal operations.

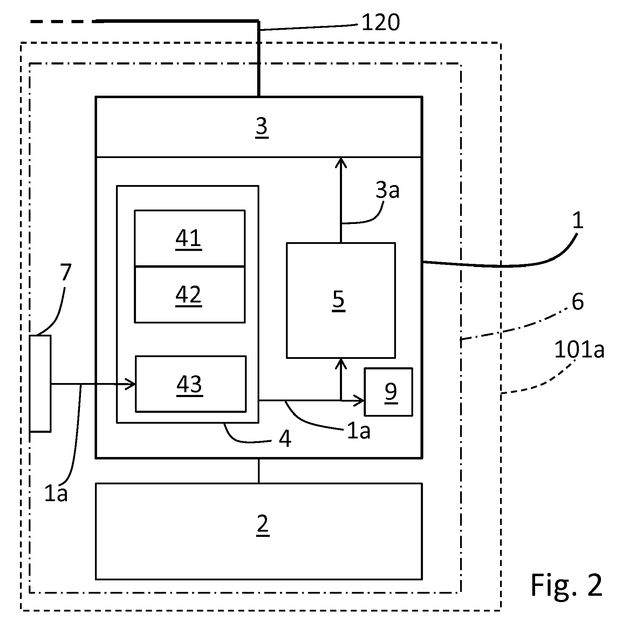

Figure 2 explains in detail how the FCI **1** is enabled, by the present invention, to obtain its location identifier **1a** and a network address **3a,** so that it can participate in the network **120** in the first place and communicate with the FCI management unit **110** without prior user intervention. The FCI **1** comprises a location determining unit **4** that has two ways of determining the location identifier **1a.**

First, the location determining unit **4** comprises a geolocating unit **41** that determines the exact coordinates of the location where the FCI **1** is installed by using GPS. The coordinates are passed on to a mapping unit **42,** which maps the coordinates to a location identifier **1a.** In the situation illustrated in Figure 2, the mapping unit **42** determines that the coordinates are within the area assigned to the location **101 a,** so the mapping unit **42** outputs the location identifier **1 a** that corresponds to the location **101a.**

Second, the location determining unit **4** comprises an interrogating unit **43** that can read out the location identifier **1a** from a machine readable data carrier **7.** The data carrier **7** is affixed to the mounting and termination unit, MTU, **6** that houses both the FCI and the attached field equipment **2.** Since the MTU **6** contains no mechanical or electronic components that are subject to wear and tear, it can be permanently installed at the location **101 a.**

The location identifier **1a** is passed on to the address determining unit **5.** The address determining unit **5** appends the location identifier **1a** to an address prefix that is specific for the network **120** to form a network address **3a** that is valid in the network **120.** The network address **3a** is passed on to the network interface **3** that connects the FCI **1** to the network **120.**

In addition, the location identifier **1a** is compared to a value that is stored in a nonvolatile memory **9** when the FCI **1** is powered up. If the location identifier **1a** that has been freshly determined by the location determining unit matches the value that is stored in the nonvolatile memory **9,** it is deemed that the FCI **1** is still installed in the same location where it was when it was last powered off. The FCI **1** can start normal operations with its present configuration. If the freshly determined location identifier **1a** differs from the value stored in the nonvolatile memory **9,** it is deemed that the location of the FCI **1** has changed. Consequently, the present configuration of the FCI **1** is deemed to be invalid, and new configuration parameters **8** are obtained from the FCI management unit **110.**

### List of reference signs

- 1: field communication interface, FCI
- 1a: location identifier of FCI 1
- 2: field equipment
- 3: network interface of FCI 1
- 3a: network address for network interface 3
- 4: location determining unit of FCI 1
- 5: address determining unit of FCI 1
- 6: mounting and termination unit, MTU
- 7: machine-readable data carrier
- 8: configuration parameters
- 9: nonvolatile memory in FCI 1
- 41: geolocating unit in location determining unit 4
- 42: mapping unit in location determining unit 4
- 43: interrogating unit in location determining unit 4
- 100: industrial control system
- 101a-101d: locations in system 100 where field equipment 2 is installable
- 110: FCI management unit in control system 100
- 120: network of control system 300
- 130: database in FCI management unit 110
- 135: searching of database 130

## Claims

1. A field communication interface (1), FCI, for interfacing field equipment (2) with a network (120) of an industrial control system (100), comprising a network interface (3) that is configurable to participate in the network (120) using a network address (3a),
**characterized in**
**that** the FCI (1) further comprises:
a location determining unit (4) configured to determine a location identifier (1 a) that uniquely identifies the physical location of the FCI (1) within the industrial control system (100) and/or within the network (120); and
an address determining unit (5) configured to determine a network address (3a) that is valid in the network (120) from the location identifier (1 a).

2. The FCI (1) according to claim 1, wherein the location determining unit (4) comprises a geolocating unit (41) configured to evaluate the physical location of the FCI (1) from radio signals emitted by a plurality of terrestrial and/or orbiting transmitters.

3. The FCI (1) according to claim 2, wherein the location determining unit (4) is additionally configured to discretize the physical location obtained from the evaluation to an accuracy finer than half of the shortest distance between any two locations (101a-101d) in the industrial control system (100) that are adapted to receive a FCI (1).

4. The FCI (1) according to any one of claims 1 to 3, wherein the location determining unit (4) further comprises a mapping unit (42) that maps a physical location to a location identifier (1 a) based on whether the physical location is within a specific area assigned to the location identifier (1 a).

5. The FCI (1) according to any one of claims 1 to 4, wherein the location determining unit (4) comprises an interrogating unit (43) configured to interrogate a unique feature of the field equipment (2) and/or a permanently installed mounting and termination unit, MTU (6), that receives and/or houses the field equipment (2).

6. The FCI (1) according to claim 5, wherein the interrogating unit (43) comprises means to read the unique feature, and/or the location identifier (1 a), from a machine-readable data carrier (7) affixed to the MTU (6) and/or to the field equipment (2).

7. The FCI (1) according to any one of claims 1 to 6, wherein the FCI (1) is further configured to receive configuration parameters (8) for the FCI (1), and/or for the field equipment (2), from the industrial control system (100).

8. The FCI (1) according to any one of claims 1 to 7, wherein the FCI (1) further comprises a nonvolatile memory (9) for storing the location identifier (1a) and wherein the FCI is further configured to, upon power-up, compare the location identifier (1 a) obtained by the location determining unit (4) with the location identifier (1 a) stored in the nonvolatile memory (9), and:
if the nonvolatile memory (9) contains no location identifier (1 a), or if the location identifier (1 a) obtained by the location determining unit (4) differs from the location identifier (1 a) stored in the nonvolatile memory (9), store the location identifier (1 a) obtained by the location determining unit (4) in the nonvolatile memory (9), retrieve configuration parameters (8) from the industrial control system (100), and if such retrieval is not successful, wait to be configured before starting normal operations; whereas
if the location identifier (1 a) stored in the nonvolatile memory (9) matches the location identifier (1 a) obtained by the location determining unit (4), start normal operations based on the present configuration parameters stored in the FCI (1).

9. The FCI (1) according to any one of claims 1 to 8, wherein the address determining unit (5) is additionally configured to biuniquely map the location identifier (1 a) onto a network address (3a).

10. The FCI (1) according to claim 9, wherein the address determining unit (5) is configured to determine the network address (3a) by appending the location identifier (1 a) to an address prefix that is specific for the network (120).

11. A FCI management unit (110) for an industrial control system (100) where field equipment (2) is installable in a plurality of discrete locations (101a-101d), wherein at least one field equipment (2) is interfaced with the network (120) of the industrial control system (100) by means of a FCI (1) according to any one of claims 1 to 10, **characterized in that** the FCI management unit (110) comprises a database (130) that is configured to hold a set of configuration parameters (8) for every location (101a-101d), wherein the database (130) is searchable (135) by the location identifier (1 a).

12. The FCI management unit (110) according to claim 11, wherein the database (130) is additionally configured to hold an indication whether the FCI management unit (110) has already been contacted by a FCI (1) at each location (101a-101d).
